# EUROPEAN PATENT APPLICATION

(11) **EP 4 644 885 A1**
(43) Date of publication of application: **05.11.2025**
(21) Application number: 23910731.1
(22) Date of filing: 27.12.2023
(51) Int. Cl.: G01N 23/046

(54) **CT MACHINE**

(30) Priority: 30.12.2022 CN 202211742841
(71) Applicant: Tsinghua University, Haidian District, Beijing 100084 (CN); NUCTECH COMPANY LIMITED, Beijing 100084 (CN)
(72) Inventor: CHEN, Zhiqiang, Beijing 100084 (CN); ZHANG, Li, Beijing 100084 (CN); LI, Yuanjing, Beijing 100084 (CN); HUANG, Qingping, Beijing 100084 (CN); LI, Guipei, Beijing 100084 (CN); ZHANG, Liguo, Beijing 100084 (CN); FENG, Bo, Beijing 100084 (CN); HONG, Mingzhi, Beijing 100084 (CN)
(74) Representative: Cabinet Beau de Loménie
(86) International application number: PCT/CN2023/142383
(87) International publication number: WO 2024/140812

(57) **Abstract**

The present disclosure provides a CT machine, which relates to the field of radiation inspection technology. The CT machine includes: a frame; a plurality of support devices on the frame; a rotatable portion being capable of rotating around a rotation axis, the rotatable portion being jointly supported by the plurality of support devices during rotation; and a scan device comprising a ray source and a detector, the ray source and the detector being arranged opposite to each other along a radial direction of the rotatable portion. At least one of the plurality of support devices includes a pivotable arm, a pivot, a driving motor and at least two rotating wheels, the pivotable arm is pivotally connected to the frame through the pivot, and the at least two rotating wheels are arranged on the pivotable arm and are located on two sides of a pivot axis of the pivotable arm respectively. At least one of the at least two rotating wheels is a driving wheel, the driving motor is directly connected to the driving wheel, the driving wheel is capable of driving the rotatable portion to rotate around the rotation axis, and the driving motor includes a power output shaft parallel to the pivot.

## Description

### TECHNICAL FIELD

The present disclosure relates to the field of radiation inspection technology, and more particularly to a CT machine.

### BACKGROUND

CT(Computed Tomography) technology plays an important role in security inspection because it can eliminate the influence of object overlapping. CT machines are also widely used in technical fields such as item detection. CT machines can not only detect smaller items such as luggage and flight cases, but also larger items such as containers and vehicles.

In the related art, a CT machine includes a slip ring device and obtains projection data at different angles through the rotation of an X-ray machine and a detector, and then obtains tomographic images by means of reconstruction methods, thereby obtaining internal information of the detected luggage items. With dual-energy or multi-energy imaging technology, current luggage inspection devices can reconstruct the atomic number and electron density of an inspected substance, which realizes identification of the substance category, and has a good effect in the detection of explosives, dangerous goods, etc.

For example, in the related art, a CT machine mainly employs a single large bearing as a rotary support, the entire CT imaging system is installed on the large bearing, and the CT imaging system is driven to rotate by a motor and a poly V-belt. While driving the rotatable portion on the large bearing, the driving motor requires a high power. This causes the machine to consume a large amount of power, further, installation of the driving motor is relatively complicated, and if the driving motor or the rotatable portion fails, it is inconvenient to disassemble and repair.

The above information disclosed is only for understanding the background of the technical concept of the present disclosure and therefore, the above information may contain information that does not constitute the prior art.

### SUMMARY

In order to mitigate the above problems in the prior art, an embodiment of the disclosure proposes a CT machine, which has the advantages of easy maintenance, light weight and low power consumption.

An aspect of the present disclosure provides a CT machine, the CT machine comprising: a frame; a plurality of support devices arranged on the frame; a rotatable portion being capable of rotating around a rotation axis, the rotatable portion being jointly supported by the plurality of support devices during rotation of the rotatable portion; and a scan device comprising a ray source and a detector, the ray source and the detector being both arranged on the rotatable portion, the ray source and the detector being arranged opposite to each other along a radial direction of the rotatable portion. At least one support device of the plurality of support devices comprises a pivotable arm, a pivot, a driving motor and at least two rotating wheels, the pivotable arm is pivotally connected to the frame through the pivot, and the at least two rotating wheels are arranged on the pivotable arm and are located on two sides of a pivot axis of the pivotable arm respectively. At least one rotating wheel of the at least two rotating wheels is a driving wheel, the driving motor is directly connected to the driving wheel, the driving wheel is capable of driving the rotatable portion to rotate around the rotation axis, and the driving motor comprises a power output shaft parallel to the pivot.

In some exemplary embodiments of the disclosure, the at least one support device of the plurality of support devices comprises two rotating wheels, orthographic projections of the pivot axis of the pivotable arm and respective rotation axes of the two rotating wheels on a first plane are substantially located on the same straight line, wherein the first plane is a plane perpendicular to the rotation axis of the rotatable portion.

In some exemplary embodiments of the disclosure, the at least one support device of the plurality of support devices further comprises a first bearing, a second bearing and a third bearing, the pivot is connected to the frame, the pivotable arm is connected to the pivot through the first bearing, and the two rotating wheels are connected to the pivotable arm through the second bearing and the third bearing respectively.

In some exemplary embodiments of the disclosure, the driving wheel is sleeved on the power output shaft, and two third bearings including the third bearing are sleeved on the power output shaft and located on two sides of the driving wheel respectively.

In some exemplary embodiments of the disclosure, an orthographic projection of the driving motor on the first plane falls within an orthographic projection of the pivotable arm on the first plane.

In some exemplary embodiments of the disclosure, at least one support device of the plurality of support devices comprises a pivotable arm, a pivot and at least two rotating wheels, the pivotable arm is pivotally connected to the frame through the pivot, the at least two rotating wheels are arranged on the pivotable arm and are located on two sides of a pivot axis of the pivotable arm respectively, the at least two rotating wheels are driven wheels, and the rotatable portion is capable of applying a friction force to the driven wheels during rotation to drive the driven wheels to rotate.

In some exemplary embodiments of the disclosure, the rotatable portion comprises a rotatable body and at least one rotatable track, the scan device is arranged on the rotatable body, and each support device of the plurality of support devices is at least partially in contact with the at least one rotatable track.

In some exemplary embodiments of the disclosure, the rotatable portion comprises two rotatable tracks, and the rotatable body is sandwiched between the two rotatable tracks in a direction parallel to the rotation axis of the rotatable portion.

In some exemplary embodiments of the disclosure, each rotatable track corresponds to two support devices of the plurality of support devices, and the two support devices are symmetrically arranged on two sides of a rotation axis of the rotatable track.

In some exemplary embodiments of the disclosure, a connecting line between the orthographic projections of the pivot axis of the pivotable arm and the rotation axes of the rotating wheels of a same support device of the plurality of support devices on the first plane forms an angle α with respect to a vertical direction, wherein the angle α is between 30° and 60°.

In some exemplary embodiments of the disclosure, at least one support device of the plurality of support devices comprises two rotating wheels, a lower rotating wheel of the two rotating wheels is a driving wheel, and the other of the two rotating wheels is a driven wheel.

In some exemplary embodiments of the disclosure, only one support device of the plurality of support devices comprises the driving wheel.

In some exemplary embodiments of the disclosure, for a same support device of the plurality of support devices, vertical distances from rotation axes of the two rotating wheels to the pivot axis of the pivotable arm are substantially equal.

Additional aspects and advantages of the present disclosure will be partially described in the description below, partially become apparent from the description below, or be understood by practicing the present disclosure.

### BRIEF DESCRIPTION OF DRAWINGS

For a more complete understanding of the disclosure and related advantages, reference will now be made to the description below in conjunction with the accompanying drawings, in which:
FIG. 1A is a front view of a CT machine according to some exemplary embodiments of the present disclosure;
FIG. 1B is a side view of a CT machine according to some exemplary embodiments of the present disclosure;
FIG. 2A is a side view of a rotatable portion of a CT machine according to some exemplary embodiments of the present disclosure;
FIG. 2B is a front view of a rotatable portion of a CT machine according to some exemplary embodiments of the present disclosure;
FIG. 3A is a front view of a support device of a CT machine according to an embodiment of the present disclosure;
FIG. 3B is a side view of a support device of a CT machine according to the embodiment of FIG. 3A of the present disclosure;
FIG. 4A is a front view of a support device of a CT machine according to another embodiment of the present disclosure;
FIG. 4B is a side view of a support device of a CT machine according to the embodiment of FIG. 4A of the present disclosure.

### DETAILED DESCRIPTION OF EMBODIMENTS

Hereinafter, embodiments of the present disclosure will be described with reference to the accompanying drawings. However, it should be understood that these descriptions are exemplary only and are not intended to limit the scope of the disclosure. Furthermore, in the description below, descriptions of well-known structures and technologies are omitted to avoid unnecessary confusion of the concepts of the present disclosure. In addition, various embodiments provided below in the present disclosure and the technical features in the embodiments can be combined with each other in any manner.

The terms used herein are only for describing specific embodiments and are not intended to limit the present disclosure. In addition, the terms "including", "comprising", etc. used herein indicate the presence of the features, steps, operations and/or components, but do not exclude the presence or addition of one or more other features, steps, operations or components. All terms (including technical and scientific terms) used herein have the meanings commonly understood by those skilled in the art, unless otherwise defined. It should be noted that the terms used here should be interpreted as having meanings consistent with the context of this specification and should not be interpreted in an idealized or overly rigid manner.

In the description of the present disclosure, it should be understood that orientations or positional relationships indicated by the terms "center", "longitudinal", "lateral", "length", "width", "thickness", "up", "down", "front", "back", "left", "right", "vertical", "horizontal", "top", "bottom", "inside", "outside", "clockwise", "counterclockwise", "axial", "radial", "circumferential" and the like are based on the orientations or positional relationships illustrated in the drawings, and are only for the convenience of describing the present disclosure and simplifying the description, rather than indicating or implying that the device or element referred to must have a specific orientation, be constructed and operated in a specific orientation, and therefore cannot be understood as limitations to the present disclosure. In addition, a feature defined with "first" and "second" may explicitly or implicitly mean there exists one or more such features. In the description of the disclosure, unless otherwise specified, "multiple" means two or more.

In the description of the disclosure, it should be noted that, unless otherwise clearly specified and limited, the terms "installation", "coupling" and "connection" should be understood in a broad sense, for example, it may be a fixed connection, a detachable connection, or an integral connection. It may be a mechanical connection or an electrical connection, it may be a direct connection or an indirect connection through an intermediate medium, it may be an internal communication between two components. For those ordinarily skilled in the art, specific meanings of the above terms in the present disclosure can be understood in specific circumstances.

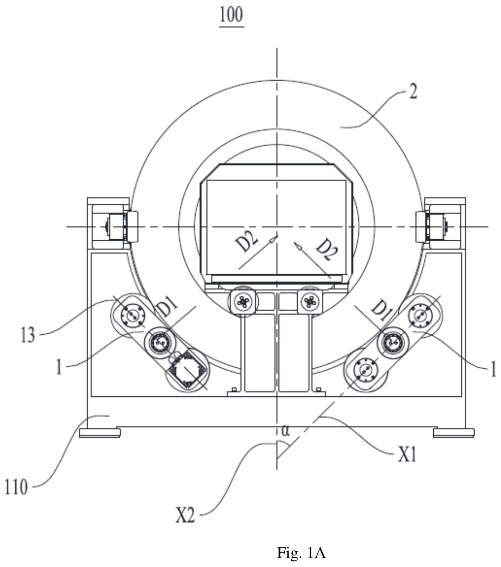

A CT machine according to an embodiment of the present disclosure will be described in detail below in conjunction with FIG. 1A to FIG. 4B.

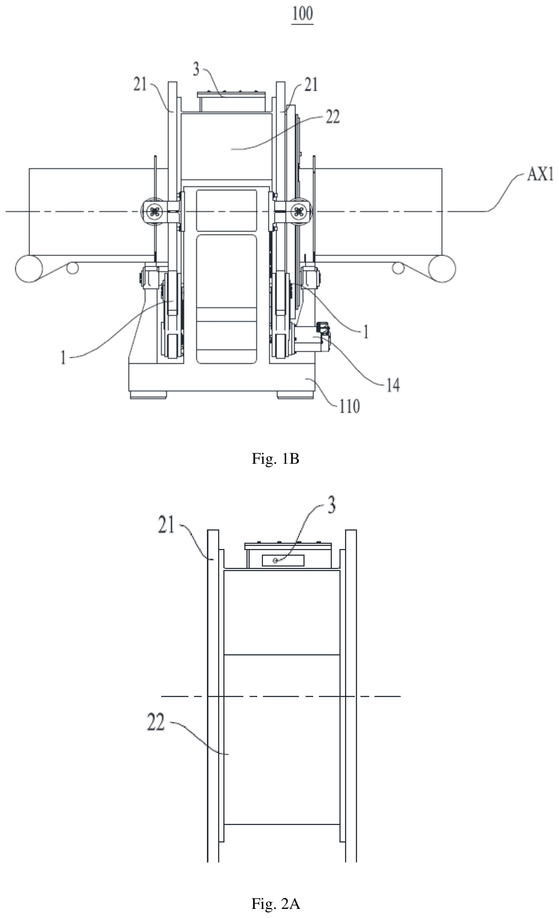

FIG. 1A is a front view of a CT machine according to an exemplary embodiment of the present disclosure. FIG. 1B is a side view of a CT machine according to an exemplary embodiment of the present disclosure.

As shown in FIG. 1A and FIG. 1B, a CT machine 100 comprises: a frame 110, a support device 1, a rotatable portion 2, and a scan device 3.

The frame 110 is used to support the CT machine 100, and the support device 1 is arranged on the frame 110. A plurality of support devices 1 may be arranged, for example, two support devices are arranged oppositely on a first side of the frame 110 close to a lower side, and another two support devices are arranged oppositely on a second side of the frame 110 close to the lower side opposite to the first side. The support device 1 is used to support the rotatable portion 2, for example, every two support devices 1 on the same side constitute a support device group for supporting the rotatable portion 2.

The support device 1 comprises a plurality of rotatable wheels 13, at least one rotatable wheel 13 of at least one support device 1 serves as a driving wheel. The specific structure of the support device 1 is described in detail below.

The rotatable portion 2 can rotate around a rotation axis AX1 under the driving of the driving wheel of the support device 1, and during the rotation of the rotatable portion 2, the rotatable portion 2 is jointly supported by the plurality of support devices 1. For example, the rotatable portion 2 is supported by two groups of support devices 1 near the lower left side and the lower right side in FIG. 1A, respectively, and the rotatable portion 2 is driven to rotate by the driving wheel. While the rotatable portion 2 is rotating, rotatable wheels 13 of other support devices 1 without driving wheels rotate in a direction opposite to the rotation direction of the rotatable portion 2, thereby effectively reducing the resistance when the rotatable portion 2 is rotating.

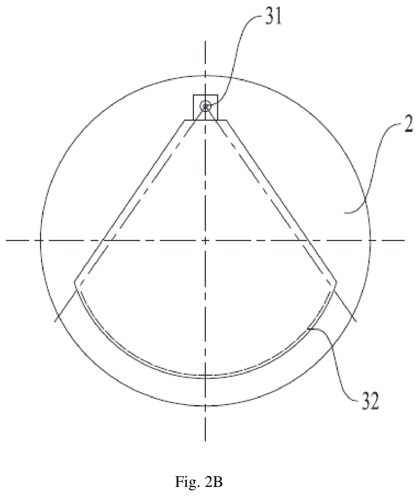

FIG. 2A is a side view of a rotatable portion of a CT machine according to some exemplary embodiments of the present disclosure. FIG. 2B is a front view of a rotatable portion of a CT machine according to some exemplary embodiments of the present disclosure.

As shown in FIG. 2A and FIG. 2B, the scan device 3 comprises a ray source 31 and a detector 32, both of which are arranged on the rotatable portion 2, and the ray source 31 and the detector 32 are arranged opposite to each other along the radial direction of the rotatable portion. For example, the ray source 31 is arranged at a first position on the circumference of the rotatable portion 2, and the detector 32 is arranged at a second position opposite to the first position on the circumference. The centers of gravity of the ray source 31 and the detector 32 are located on the rotation axis AX1 or basically located near the rotation axis AX1, so as to ensure that the rotatable portion 2 will not vibrate when it drives the ray source 31 and the detector 32 to rotate or the vibration generated is slight.

In an embodiment of the disclosure, the plurality of support devices 1 limit the movement of the rotatable portion 2 along a first radial direction D1. That is, each support device can provide a support force for the rotatable portion 2 in a second radial direction D2 opposite to the first radial direction D1, so that the rotation axis AX1 is substantially kept free from deviation during the rotation of the rotatable portion 2.

By way of example, both the first radial direction D1 and the second radial direction D2 intersect the rotation axis AX1 of the rotatable portion 2, that is, each support device 1 can limit the movement of the rotatable portion 2, so that the rotation axis AX1 of the rotatable portion 2 is substantially maintained at a fixed position, which enables the rotatable portion 2 to remain in a stable state when rotating, and avoids vibration of the CT machine caused by the deviation of the rotation center of the rotatable portion 2 when rotating.

In some embodiments of the disclosure, as shown in FIG. 1A to FIG. 2B, the rotatable portion 2 comprises a rotatable body 22 and at least one rotatable track 21, and the scan device 3 is arranged on the rotatable body 22. At least one rotatable track 21 may be an annular track, that is, at least one of the rotatable tracks 21 is an annular track with an inner circumferential surface and an outer circumferential surface, and the circular center of the inner circumferential surface is the same as the circular center of the outer circumferential surface, i.e., the inner circumferential surface and the outer circumferential surface form concentric circles.

In an example, the rotatable portion comprises a rotatable body and a rotatable track, and the rotatable track is arranged on a side of the rotatable body in a direction parallel to the rotation axis AX1 of the rotatable body. In some embodiments, the rotatable portion may have one rotatable body and more than two rotatable tracks.

In other embodiments, the rotatable track 21 may be a disc-shaped track, for example, and a rotatable body 22 is sandwiched between two disc-shaped tracks.

In some embodiments of the disclosure, as shown in FIG. 2A and FIG. 2B, the rotatable portion 2 comprises two rotatable tracks 21, the rotatable body 22 is sandwiched between the two rotatable tracks 21 in a direction parallel to the rotation axis AX1 of the rotatable portion 2, and the two rotatable tracks 21 may be designed as annular tracks and/or disc-shaped tracks. The support device 1 may be at least partially in contact with each rotatable track 21, for example, the support device 1 is in contact with the outer circumferential surface of the rotatable track 21. Specifically, the outer circumferential surface of the rotatable wheel 13 of the support device 1 is in contact with the outer circumferential surface of the rotatable track 21.

As shown in FIG. 1A and FIG. 1B, each rotatable track 21 is corresponding to two support devices 1, and the two support devices 1 are symmetrically arranged on two sides of the rotation axis AX1 of the rotatable track 21, for example, at positions of the rotatable portion 2 close to the lower side of the frame 110.

In some embodiments of the disclosure, two or more support devices are arranged correspondingly for each rotatable track 21. In the two or more support devices, for example, only one support device includes a driving wheel, and the other support devices may not be provided with a driving wheel but only include a driven wheel.

In an embodiment, the number of support devices including a driving wheel may be set according to actual needs. For example, if the rotatable portion is large and used for performing detection of large items, multiple support devices having a driving wheel may be arranged so as to effectively control rotation of the rotatable portion. In case the rotatable portion is small, a smaller number of support devices having a driving wheel may be arranged so as to reduce the power consumption of the CT machine and achieve effective rotation control of the rotatable portion.

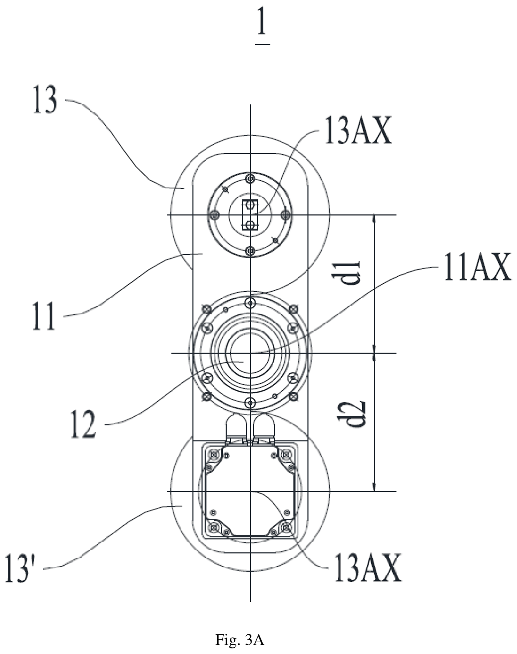

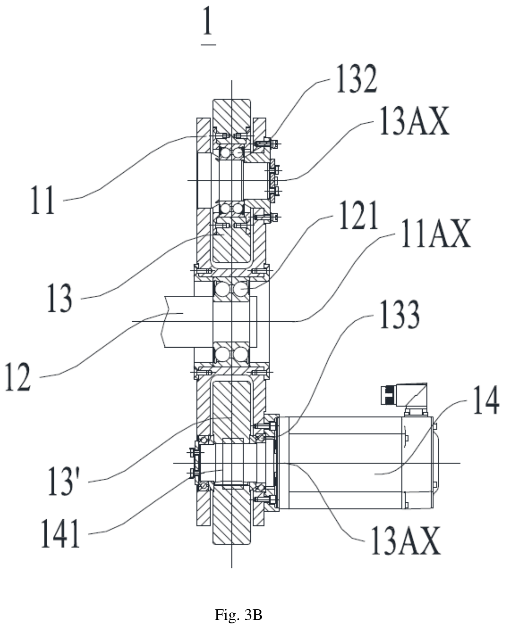

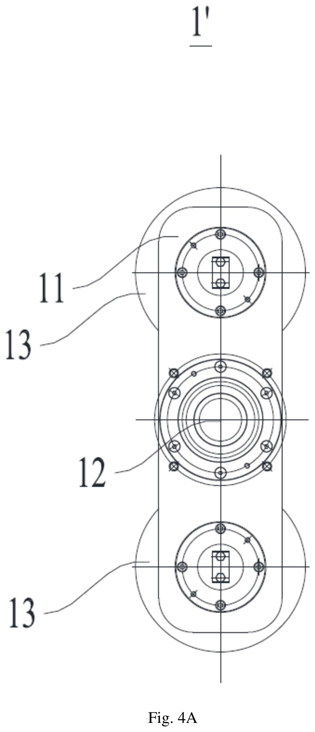

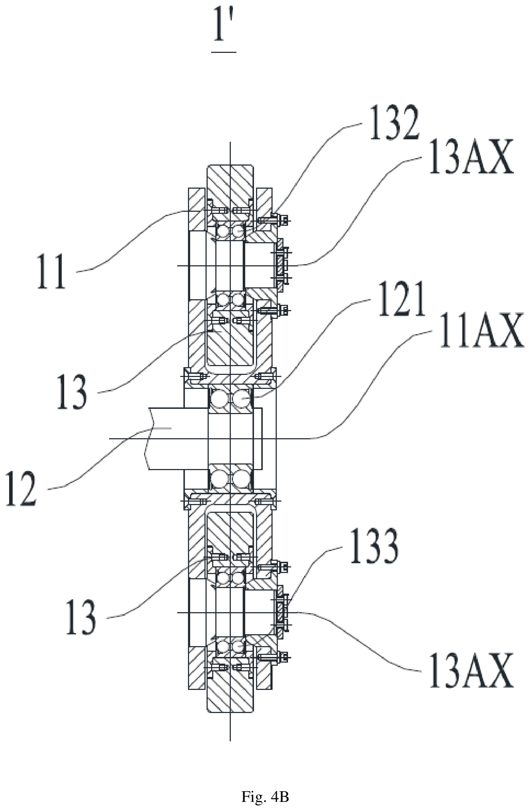

FIG. 3A is a front view of a support device of a CT machine according to an embodiment of the disclosure. FIG. 3B is a side view of a support device of a CT machine according to the embodiment of FIG. 3A of the present disclosure. FIG. 4A is a front view of a support device of a CT machine according to another embodiment of the present disclosure. FIG. 4B is a side view of a support device of a CT machine according to the embodiment of FIG. 4A of the present disclosure.

As shown in FIG. 3A to FIG. 4B, the support device 1 comprises a pivotable arm 11, a pivot 12 and a rotating wheel 13. For example, two or more rotating wheels 13 are arranged.

As shown in FIG. 3A and FIG. 3B, a structure of a support device 1 is illustrated. The support device 1 comprises a pivotable arm 11, a pivot 12 and two rotating wheels, and the pivot axis of the pivotable arm 11 is denoted by 11AX. The pivotable arm 11 is pivotally connected to the frame 110 through the pivot 12, and the two rotating wheels are arranged on the pivotable arm 11 and located on two sides of the pivot axis 11AX of the pivotable arm 11 respectively. One of the two rotating wheels is a driven wheel 13, and the other is a driving wheel 13'.

In an exemplary embodiment of the disclosure, as shown in FIG. 1B and FIG. 3B, the CT machine further comprises a driving motor 14, which is arranged on the pivotable arm 11 of the support device. For example, the driving motor 14 is fixed to a side of the pivotable arm 11 by a screw or a nut.

The driving motor 14 is directly connected to the driving wheel 13', and the driving wheel 13' is capable of driving the rotatable portion 2 to rotate around the rotation axis AX1. The driving motor 14 comprises a power output shaft 141, and the power output shaft 141 of the driving motor is arranged parallel to the pivot 12.

For example, a rotation axis 13AX of the driving wheel 13' coincides with the rotation axis of the power output shaft 141 of the driving motor, and the driving wheel 13' is directly sleeved on the power output shaft 141 of the driving electrode, so that the driving motor 14 can drive the driving wheel 13' to rotate.

By way of example, as shown in FIG. 3B, each support device may comprise a pivotable arm 11, and each pivotable arm is provided with a plurality of rotating wheels, for example, two rotating wheels are symmetrically arranged at two ends of the pivotable arm, including a driven wheel 13 and a driving wheel 13'. The pivotable arm 11 is pivotally connected to the frame 110, for example, the pivotable arm 11 is pivotally connected to the frame through the pivot 12, and the pivotable arm 11 can rotate around the pivot 12.

By way of example, as shown in FIG. 1A, the support device 1 comprises two rotating wheels. One of the two rotating wheels which is located below is a driving wheel, and the other is a driven wheel. With the below rotating wheel serving as the driving wheel, a greater friction force can be generated on the rotatable portion 2, thereby preventing the driving wheel and the rotatable portion from sliding relative to each other, improving control of the rotation accuracy of the rotatable portion 2, and effectively enhancing the imaging quality of the CT machine.

In an embodiment, at least one support device 1 may comprise a pivotable arm 11, a pivot 12 and at least two rotating wheels 13. The pivotable arm 11 is pivotally connected to the frame 110 through the pivot 12. At least two rotating wheels 13 are arranged on the pivotable arm 11 and located on two sides of the pivot axis of the pivotable arm 11 respectively, for example, two rotating wheels 13 are symmetrically arranged at two ends of the pivotable arm. At least two rotating wheels 13 are driven wheels, and the rotatable portion 2 can apply a friction force to the driven wheels during rotation so as to drive the driven wheels to rotate. In the embodiment of the present disclosure, by designing the support device 1 as a "seesaw" structure, during rotation of the rotatable portion 2, each support device 1 can adaptively support the rotatable portion 2, that is, according to contact of each support point and rotation, etc., the pivotable arm 11 of each support device 1 can adaptively pivot and automatically distribute the support force given by each rotating wheel to the rotatable portion 2, so as to achieve a better support effect on the rotatable portion.

In some exemplary embodiments of the disclosure, at least one support device 1 of the plurality of support devices 1 can perform a dual function of driving and supporting the rotatable portion 2. The main difference between the structure of the support device 1 that performs a dual function of driving and supporting the rotatable portion 2 and the structure of the support device 1 that plays a role of supporting the rotatable portion 2 lies in that the support device 1 that performs a dual function of driving and supporting the rotatable portion 2 is connected with components such as a driving motor. Besides that, the two support devices are substantially identical in structure. The substantially identical structures and components are represented by the same reference numerals herein. Specifically, at least one support device 1 may comprise a pivotable arm 11, a pivot 12, a driving motor 14 and at least two rotating wheels 13. The pivotable arm 11 is pivotally connected to the frame 110 through the pivot 12, and the at least two rotating wheels 13 are arranged on the pivotable arm 11 and located on two sides of the pivot axis of the pivotable arm 11 respectively. At least one of the at least two rotating wheels 13 is a driving wheel, which is connected to the driving motor 14 and can rotate under the driving of the driving motor 14. In this embodiment of the disclosure, the support device 1 that performs a dual function of driving and supporting the rotatable portion 2 also has a "seesaw" structure, so that during rotation of the rotatable portion 2, the support device 1 can also adaptively support the rotatable portion 2.

In some embodiments of the disclosure, as shown in FIG. 3B and FIG. 4B, at least one support device comprises a pivotable arm 11 and two rotating wheels, each rotating wheel has a respective rotation axis 13AX. For the same support device 1, orthographic projections of the pivot axis 11AX of the pivotable arm 11 and respective rotation axes 13AX of the two rotating wheels on a first plane are substantially located on the same straight line, the first plane is a plane perpendicular to the rotation axis AX1 of the rotatable portion.

By way of example, in the same support device, vertical distances from the rotation axes 13AX of the two rotating wheels to the pivot axis 11AX of the pivotable arm are substantially equal. As shown in FIG. 3A, the distance from the rotation axis 13AX of the driven wheel 13 on the upper side of the support device 1 to the pivot axis 11AX is d1, the distance from the rotation axis 13AX of the driving wheel 13' on the lower side of the support device 1 to the pivot axis 11AX is d2, and d1 is substantially equal to d2.

In some embodiments of the disclosure, an orthographic projection of the driving motor 14 on the first plane falls within an orthographic projection of the pivotable arm 11 on the first plane.

As shown in FIG. 1A, a connecting line X1 between the orthographic projections of the pivot axis of the pivotable arm and the rotation axes of the rotating wheels of the same support device on the first plane forms an angle α with respect to a vertical direction X2, wherein the angle α is between 30° and 60°. For example, the angle α may be 30°, 45° or 60°, etc. According to an embodiment of the disclosure, with the angle α, the support device can be better in contact with the outer circumferential surface of the rotatable portion, and the rotatable portion can be more stable during rotation, vibration caused by rotation can be avoided, which would otherwise decrease the imaging quality of the CT machine.

By way of example, in the same support device 1, vertical distances from the rotation axes 13AX of the two rotating wheels to the pivot axis 11AX of the pivotable arm are substantially equal. That is, the two rotating wheels are symmetrically arranged with respect to the pivot axis 11AX, which enables the rotatable portion 2 to maintain a stable state when rotating, and avoids an interference of the support device to the rotation of the rotatable portion 2 due to asymmetric arrangement.

According to an embodiment of the present disclosure, by means of a distributed and adaptive multi-point support, the rotational stability of the ray source and the detector can be effectively improved, which helps to enhance the imaging quality of the CT machine and improve the detection accuracy, and also extend the service lives of the structural components of the CT machine.

As shown in FIG. 3A to FIG. 4B, at least one support device further comprises a first bearing 121, a second bearing 132 and a third bearing 133, the pivot 12 is connected to the frame 110, the pivotable arm 11 is connected to the pivot 12 through the first bearing 121, and two rotating wheels 13 are connected to the pivotable arm 11 through the second bearing 132 and the third bearing 133 respectively.

As shown in FIG. 3B, the driving wheel 13' is sleeved on the power output shaft 141, and two third bearings 133 are sleeved on the power output shaft 141 respectively and located on two sides of the driving wheel. By using two third bearings to connect the power output shaft 141 with the driving wheel 13', it can be ensured that the driving wheel rotates stably when driven by the driving motor.

In other words, the pivotable arm 11 is rotatably supported on the pivot 12 by means of the first bearing 121, and the two rotating wheels 13 can be rotatably supported on the pivotable arm 11 by means of the second bearing 132 and the third bearing 133 respectively. In the embodiment of the present disclosure, with the distributed multi-point support, the rotary support mode with a single large bearing in a CT machine of the related art is changed to the rotary support mode with multiple distributed small bearings. Compared with a large bearing, manufacturing of a small bearing has lower difficulty and cost, and maintenance and replacement are more convenient.

In addition, by directly connecting the driving motor to the driving wheel, loss caused by the transmission of the driving force can be reduced, and different numbers of support devices with driving motors can be arranged for rotatable portions of different sizes to meet requirements of different scenarios, which can reduce the power consumption of the CT machine.

As shown in FIG. 4A and FIG. 4B, the support device 1' comprises a pivotable arm 11, a pivot 12 and two rotating wheels. The pivotable arm 11 is pivotally connected to the frame 110 through the pivot 12. At least two rotating wheels are arranged on the pivotable arm 11 and located on two sides of the pivot axis 11AX of the pivotable arm 11 respectively. The two rotating wheels are driven wheels 13. The rotatable portion 2 can apply a friction force to the driven wheel 13 during rotation to drive the driven wheel 13 to rotate.

In other embodiments, the support device may comprise three, four or more rotating wheels.

In some embodiments of the present disclosure, as shown in FIG. 2A and FIG. 2B, the rotatable portion comprises a rotatable body 22 and at least one rotatable track 21, the scan device 3 is disposed on the rotatable body 22, and the plurality of support devices 1 are at least in partial contact with the at least one rotatable track 21 respectively. Specifically, the plurality of support devices 1 are in partial contact with the outer circumferential surface of the at least one rotatable track 21 respectively.

By way of example, the rotatable portion 2 comprises two rotatable tracks 21, and the rotatable body 22 is sandwiched between the two rotatable tracks 21 in a direction parallel to the rotation axis AX1 of the rotatable portion 2. Each of the two rotatable tracks 21 is supported by at least two support devices 1, and at least two support devices 1 are arranged below the rotatable track and on two sides of the rotation axis AX1 of the rotatable portion 2.

The rotatable body 22 is sandwiched between the two rotatable tracks 21, so that a more stable support for the rotatable body 22 can be achieved based on a relatively simple structure, and it is convenient to make the center of gravity of the rotating portion of the CT machine located between the two rotatable tracks 21, thereby enhancing the operation stability. That is to say, with a double-track support structure, the rotational stability of the CT machine can be further improved based on a relatively simple structure, which helps to obtain a more stable and clear CT image.

For the CT machines of the embodiments of the disclosure, by means of a distributed and adaptive multi-point support, the rotational stability of the ray source and the detector can be effectively improved, which helps to enhance the image quality of the CT machine, improve the detection accuracy, and also extend the service lives of the structural components of the CT machine.

In this specification, descriptions with reference to the terms "an embodiment", "some embodiments", "illustrative embodiments", "examples", "specific examples" or "some examples", etc. mean that the specific features, structures, materials or characteristics described in combination with the embodiment or example are included in at least one embodiment or example of the present disclosure. In this specification, the schematic representations of the above terms do not necessarily refer to the same embodiment or example. Moreover, the specific features, structures, materials or characteristics described can be combined in any one or more embodiments or examples in a suitable manner.

Although some embodiments of the disclosure have been illustrated and described, those ordinarily skilled in the art can appreciate that various changes, modifications, substitutions and variations can be made to these embodiments without departing from the principle and purpose of the present disclosure, and the scope of the application is defined by the claims and their equivalents. It will be appreciated by those skilled in the art that the features described in the various embodiments and/or claims of the present disclosure may be combined and/or united in a variety of ways, even if such combinations and/or unions are not explicitly described herein. In particular, the features described in the various embodiments and/or claims of the present disclosure may be combined and/or united in a variety of ways without departing from the spirit and teaching of the present disclosure. All of these combinations and/or unions fall within the scope of the application.

## Claims

1. A CT machine, **characterized by** comprising:
a frame;
a plurality of support devices arranged on the frame;
a rotatable portion being capable of rotating around a rotation axis, the rotatable portion being jointly supported by the plurality of support devices during rotation of the rotatable portion; and
a scan device comprising a ray source and a detector, the ray source and the detector being both arranged on the rotatable portion, the ray source and the detector being arranged opposite to each other along a radial direction of the rotatable portion,
wherein at least one support device of the plurality of support devices comprises a pivotable arm, a pivot, a driving motor and at least two rotating wheels, the pivotable arm is pivotally connected to the frame through the pivot, and the at least two rotating wheels are arranged on the pivotable arm and are located on two sides of a pivot axis of the pivotable arm respectively, and
wherein at least one rotating wheel of the at least two rotating wheels is a driving wheel, the driving motor is directly connected to the driving wheel, the driving wheel is capable of driving the rotatable portion to rotate around the rotation axis, and the driving motor comprises a power output shaft parallel to the pivot.

2. The CT machine according to claim 1, **characterized in that** the at least one support device of the plurality of support devices comprises two rotating wheels,
orthographic projections of the pivot axis of the pivotable arm and respective rotation axes of the two rotating wheels on a first plane are substantially located on the same straight line, wherein the first plane is a plane perpendicular to the rotation axis of the rotatable portion.

3. The CT machine according to claim 2, **characterized in that** the at least one support device of the plurality of support devices further comprises a first bearing, a second bearing and a third bearing, the pivot is connected to the frame, the pivotable arm is connected to the pivot through the first bearing, and the two rotating wheels are connected to the pivotable arm through the second bearing and the third bearing respectively.

4. The CT machine according to claim 3, **characterized in that** the driving wheel is sleeved on the power output shaft, and two third bearings including the third bearing are sleeved on the power output shaft and located on two sides of the driving wheel respectively.

5. The CT machine according to claim 3, **characterized in that** an orthographic projection of the driving motor on the first plane falls within an orthographic projection of the pivotable arm on the first plane.

6. The CT machine according to claim **1, characterized in that** at least one support device of the plurality of support devices comprises a pivotable arm, a pivot and at least two rotating wheels, the pivotable arm is pivotally connected to the frame through the pivot, the at least two rotating wheels are arranged on the pivotable arm and are located on two sides of a pivot axis of the pivotable arm respectively, the at least two rotating wheels are driven wheels, and the rotatable portion is capable of applying a friction force to the driven wheels during rotation to drive the driven wheels to rotate.

7. The CT machine according to claim 1, **characterized in that** the rotatable portion comprises a rotatable body and at least one rotatable track, the scan device is arranged on the rotatable body, and each support device of the plurality of support devices is at least partially in contact with the at least one rotatable track.

8. The CT machine according to claim 7, **characterized in that** the rotatable portion comprises two rotatable tracks, and the rotatable body is sandwiched between the two rotatable tracks in a direction parallel to the rotation axis of the rotatable portion.

9. The CT machine according to claim 8, **characterized in that** each rotatable track correspond to two support devices of the plurality of support devices, and the two support devices are symmetrically arranged on two sides of a rotation axis of the rotatable track.

10. The CT machine according to claim 2, **characterized in that** a connecting line between the orthographic projections of the pivot axis of the pivotable arm and the rotation axes of the rotating wheels of a same support device of the plurality of support devices on the first plane forms an angle α with respect to a vertical direction, wherein the angle α is between 30° and 60°.

11. The CT machine according to claim 1, **characterized in that** at least one support device of the plurality of support devices comprises two rotating wheels, a lower rotating wheel of the two rotating wheels is a driving wheel, and the other of the two rotating wheels is a driven wheel.

12. The CT machine according to claim **1, characterized in that** only one support device of the plurality of support devices comprises the driving wheel.

13. The CT machine according to claim **1, characterized in that**, for a same support device of the plurality of support devices, vertical distances from rotation axes of the two rotating wheels to the pivot axis of the pivotable arm are substantially equal.
